(19) Europäisches Patentamt
European Patent Office
Office européen des brevets

(11) EP 0 742 260 B1

(12) EUROPÄISCHE PATENTSCHRIFT

(45) Veröffentlichungstag und Bekanntmachung des Hinweises auf die Patenterteilung:
**05.07.2000 Patentblatt 2000/27**

(51) Int Cl.7: **C08K 5/43**

(21) Anmeldenummer: **96106507.5**

(22) Anmeldetag: **25.04.1996**

(54) **Gegen gamma-Strahlung stabilisierte (Co)Polycarbonate**

(Co)polycarbonates stabilized against gamma-rays

(Co)polycarbonates stabilisés contes des rayonnements gamma

(84) Benannte Vertragsstaaten:
**DE ES FR GB IT NL SE**

(30) Priorität: **08.05.1995 DE 19516787**

(43) Veröffentlichungstag der Anmeldung:
**13.11.1996 Patentblatt 1996/46**

(73) Patentinhaber: **BAYER AG**
**51368 Leverkusen (DE)**

(72) Erfinder:
- **Ebert, Wolfgang, Dr.**
**47800 Krefeld (DE)**
- **Hufen, Ralf**
**47239 Duisburg (DE)**
- **Schubart, Rüdiger, Dr.**
**51467 Bergisch Gladbach (DE)**
- **Fennhoff, Gerhard, Dr.**
**47877 Willich (DE)**

(56) Entgegenhaltungen:
**EP-A- 0 374 816** **EP-A- 0 376 289**
**US-A- 4 782 103**

- **DATABASE WPI Section Ch, Week 9112 Derwent Publications Ltd., London, GB; Class A23, AN 91-085438 XP002010382 & SU-A-1 558 939 (PLASTMASSY ASOC) , 23.April 1990**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 742 260 B1

Printed by Jouve, 75001 PARIS (FR)

**Beschreibung**

Die Erfindung betrifft gegen die verfärbende Wirkung der β,γ-Strahlung stabilisierte (Co)-Polycarbonate auf Basis von Diphenolen und einem oder mehreren Stabilisatoren.

Gegenstand der Erfindung sind Polycarbonatformmassen enthaltend

a) 97,5 Gew.-% bis 99,99 Gew.-% eines Polycarbonates oder Copolycarbonates und

b) 0,01 Gew.-% bis 2,5 Gew.-% eines β,γ-Stabilisators der allgemeinen Formel (I), bezogen jeweils auf 100 Gew.-% aus a) + b),

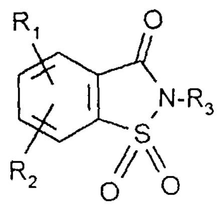

(I)

worin
$R_1$ und $R_2$ unabhängig voneinander für H, $C_1$-$C_{36}$ gegebenenfalls verzweigte Alkylgruppen, bevorzugt $C_1$-$C_{12}$ gegebenenfalls verzweigte Alkyl- oder Alkoxygruppen, $C_7$-$C_{18}$ gegebenenfalls verzweigte und/oder substituierte Alkylaryl-Reste oder Aralkyl-Reste oder $C_6$-$C_{18}$ gegebenenfalls substituierte Aryl-Reste stehen, oder worin zwei Reste $R_1$ und $R_2$ für einen ankondensierten, gegebenenfalls substituierten aromatischen Ring stehen, und worin $R_3$ die unter $R_1$ genannten Bedeutungen hat, ausgenommen Saccharin aber besonders bevorzugt, Methyl, Benzyl oder Phenyl steht.

Als weiterer Stabilisator können c) 0,01 Gew.-% bis 3,5 Gew.-%, bevorzugt 0,1 Gew.-% bis 2,0 Gew.-% gegebenenfalls endverkapptes Polypropylenglykol mit einem mittleren Molekulargewicht von 250 bis 10.000, bevorzugt 500 bis 5.000 in den erfindungsgemäßen Polycarbonatformmassen enthalten sein, wobei sich die Gewichtsprozente von c) jeweils auf 100 Gew.-% a) + b) beziehen.

Ein weiterer Gegenstand der Erfindung sind Polycarbonatformmassen enthaltend

a) 97,5 Gew.-% bis 99,99 Gew.-% eines Polycarbonates oder Copolycarbonates und

b) 0,01 Gew.-% bis 2,5 Gew.-% eines β,γ-Stabilisators der allgemeinen Formel (I), bezogen jeweils auf 100 Gew.-% aus a) + b),

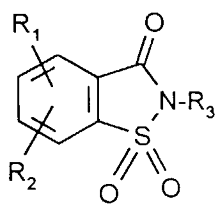

(I)

worin
$R_1$ und $R_2$ unabhängig voneinander für H, $C_1$-$C_{36}$ gegebenenfalls verzweigte Alkylgruppen, bevorzugt $C_1$-$C_{12}$ gegebenenfalls verzweigte Alkyl- oder Alkoxygruppen, $C_7$-$C_{18}$ gegebenenfalls verzweigte und/oder substituierte Alkylaryl-Reste oder Aralkyl-Reste oder $C_6$-$C_{18}$ gegebenenfalls substituierte Aryl-Reste stehen, oder worin zwei Reste $R_1$ und $R_2$ für einen ankondensierten, gegebenenfalls substituierten aromatischen Ring stehen, und worin $R_3$ die unter $R_1$ genannten Bedeutungen hat, aber besonders bevorzugt für Methyl, Benzyl oder Phenyl steht und als
weiteren Stabilisator c) 0,01 Gew.-% bis 3,5 Gew.-%, bevorzugt 0,1 Gew.-% bis 2,0 Gew.-% gegebenenfalls endverkapptes Polypropylenglykol mit einem mittleren Molekulargewicht von 250 bis 10.000, bevorzugt 500 bis 5.000 in den erfindungsgemäßen Polycarbonatformmassen wobei sich die Gewichtsprozente von c) jeweils auf 100 Gew.-% a) + b) beziehen.

Der Stand der Technik in der Stabilisierung gegen γ-Strahlen besteht in einer Ausrüstung des Polycarbonates

mit oligomeren Polypropylenglykolen (EP 376 289), oligomeren bromierten Bisphenol A-Polycarbonaten (EP 114 973), Blends aus Polycarbonat und Polyestern auf Basis von Terephthalsäure und Cyclohexandimethanol(EP 152 012) oder organischen Disulfiden, jeweils gegebenenfalls in Kombination mit oligomeren Polypropylenglykolen.

Nachteilig an diesen Stabilisatoren sind z.B. beim Polypropylenglykol alleine die unzureichende Stabilisierung bei höheren Strahlungsdosen, beim bromierten System die mangelhafte Einsetzbarkeit aufgrund des Halogenanteils, bei der Verwendung der Polyesterblends die fehlende Fähigkeit zur Heißdampfsterilisation und beim Disulfidsystem das kleine Verarbeitungsfenster bevor Zersetzung auftritt.

Die Aufgabe bestand daher darin, ein Additivsystem zu entwickeln, das unter Herstellungs- und Verarbeitungsbedingungen stabil ist, zu Heißdampf-sterilisierbaren Formkörpern führt, um eine universelle Einsetzbarkeit zu garantieren, keine Halogen-haltigen Stabilisatoren verwendet und eine ausreichende Stabilisierung bei Bestrahlung mit 5 Mrad garantiert.

Die Aufgabe wurde durch den erfindungsgemäßen Zusatz des Stabilisators (I) gelöst.

Für die Herstellung der erfindungsgemäß einzusetzenden Polycarbonate geeignete Diphenole sind solche der allgemeinen Formel (II)

$$HO\text{-}Z\text{-}OH \qquad (II)$$

mit vorzugsweise 6 bis 30 C-Atomen sind sowohl einkernige, als auch mehrkernige Diphenole, die Heteroatome enthalten können und unter den Bedingungen der Polycarbonatherstellung und deren thermischer Bestrahlung inerte Substituenten haben können.

Beispielsweise seien Hydrochinon, Resorcin, Dihydroxydiphenyl, Bis-(hydroxyphenyl)-alkane, Bis-(hydroxyphenyl)-cycloalkane, Bis-(hydroxyphenyl)-sulfide, -ether, -sulfoxide, -sulfone und α,α-Bis-(hydroxyphenyl)-diisopropylbenzole, sowie deren kernalkylierte und kernhalogenierte Verbindungen genannt.

Geeignete Diphenole sind beispielsweise in den US-Patenten 3 028 365, 2 999 835, 3 062 781, 3 148 172 und 4 982 014, in den deutschen Offenlegungsschriften 1 570 703 und 2 063 050, sowie in der Monographie "H. Schnell, Chemistry and Physics of Polycarbonates, Interscience Publishers, New York, 1964" beschrieben.

Bevorzugte Diphenole sind 4,4'-Dihydroxydiphenyl, 2,2-Bis-(4-hydroxyphenyl)propan, 2,4-Bis-(4-hydroxyphenyl)-2-methylbutan, 1,1-Bis-(4-hydroxyphenyl)cyclohexan, α,α-Bis-(4-hydroxyphenyl)-p-diisopropylbenzol, α,α-Bis-(4-hydroxyphenyl)-m-diisopropylbenzol, 2,2-Bis-(3-methyl-4-hydroxyphenyl)-propan, 2,2-Bis(3-chlor-4-hydroxyphenyl)-propan, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,1-Bis(3,5-dimethyl-4-hydroxyphenyl)-cyclohexan, α,α-Bis-(3,5-dimethyl-4-hydroxyphenyl)-p-diisopropylbenzol, 1,1-Bis-(4-hydroxyphenyl)-3,3,5-trimethylcyclohexan, 1,1-Bis-(4-hydroxyphenyl)-3-methylcyclohexan, 1,1-Bis-(4-hydroxyphenyl)-3,3-dimethylcyclohexan, 1,1-Bis-(4-hydroxyphenyl)-4-methylcyclohexan, 2,2-Bis-(3,5-dichlor-4-hydroxyphenyl)-propan, 2,2-Bis-(3,5-dibrom-4-hydroxyphenyl)-propan, 1,1-Bis-(4-hydroxyphenyl)-1-phenyl-ethan, 2,2-Bis-(3,5-dimethyl-4-hydroxyphenyl)-2-phenyl-ethan, 2,2-Bis-(4-hydroxyphenyl)-2,2-diphenyl-ethan, 9,9-Bis(4-hydroxyphenyl)-fluoren, 9,9-Bis-(3,5-dimethyl-4-hydroxyphenyl)-fluoren.

Besonders bevorzugte Diphenole sind z.B. 2,2-Bis-(4-hydroxyphenyl)-propan, 2,2-Bis-(3,5-dimethyl-4-hydroxyphenyl)-propan, 1,1-Bis-(4-hydroxyphenyl)-cyclohexan, 1,1-Bis-(4-hydroxyphenyl)-1-phenyl-ethan, 1,1-Bis-(4-hydroxyphenyl)-3,3,5-trimethylcyclohexan, 1,1-Bis-(4-hydroxyphenyl)-3-methylcyclohexan, 1,1-Bis-(4-hydroxyphenyl)-4-methylcyclohexan, 9,9-Bis-(3,5-dimethyl-4-hydroxyphenyl)fluoren.

Insbesondere sind 2,2-Bis-(4-hydroxyphenyl)-propan, 1,1-Bis-(4-hydroxyphenyl)-3,3,5-trimethylcyclohexan und 1,1-Bis-(4-hydroxyphenyl)-1-phenylethan bevorzugt.

Es können auch beliebige Mischungen der vorgenannten Diphenole verwendet werden.

Zwecks Verbesserung des Fließverhaltens können auch geringe Mengen, vorzugsweise Mengen zwischen 0,05 und 2,0 Mol-% (bezogen auf Mole an eingesetzten Diphenolen), an tri- oder mehr als trifunktionellen Verbindungen, insbesondere solchen mit drei oder mehr als drei phenolischen Hydroxylgruppen in bekannter Weise bei der Synthese mitverwendet werden. Einige der verwendbaren Verbindungen sind beispielsweise 1,3,5-Tris-(4-hydroxyphenyl)-benzol, 1,3,5-Tris-(4-(4-hydroxyphenylisopropyl)-phenyl)-benzol, 1,1,1-Tris-(4-hydroxyphenyl)-ethan, 2,6-Bis-(2-hydroxy-5'-methyl-benzyl)-4-methylbenzol, 2-(4-Hydroxyphenyl)-2-(2,4-dihydroxyphenyl)-propan, Hexakis-(4-(4-hydroxyphenylisopropyl)-phenyl)-orthoterephthalsäureester, Tetrakis-(4-hydroxyphenyl)-methan, 1,1-Bis-((4',4"-dihydroxytriphenyl)-methyl)-benzol, 3,3-Bis-(4-hydroxyphenyl)-2-oxo-2,3-dihydroindol, 3,3-Bis-(4-hydroxy-3-methylphenyl)-2-oxo-2,3-dihydroindol, ferner geeignet sind die diesen Verbindungen entsprechenden Chlorkohlensäureester, sowie die Säuren oder bevorzugt die Säurechloride von mehr als 2-basigen aliphatischen oder aromatischen Carbonsäuren, also beispielsweise 2,4-Dihydroxybenzoesäure bzw. 2,4-Dihydroxybenzoesäuredichlorid, Trimesinsäure bzw. Trimesinsäuretrichlorid, Trimellithsäure bzw. Trimellithsäuretrichlorid, Cyanursäuretrichlorid, wobei diese Verzweiger einzeln oder im Gemisch vorgelegt oder der Synthese portionsweise zugesetzt werden können.

Als Kettenabbrecher können in der Synthese Phenole, gegebenenfalls substituierte Phenole, deren Chlorkohlensäureester, Monocarbonsäuren, sowie deren Säurechloride, bevorzugt Cumylphenol, Phenol, tert.-Butylphenol und i-Octylphenol gegebenenfalls als Mischungen, mit den üblichen Verunreinigungen und Isomeren verwendet werden, wobei die Kettenabbrecher einzeln oder im Gemisch mit den Diphenolen vorgelegt oder der Synthese portionsweise zugesetzt werden können.

Die Herstellung der erfindungsgemäß einzusetzenden Polycarbonate bzw. Polycarbonatgemische kann im wesentlichen nach folgenden drei bekannten Methoden (vgl. H. Schnell, "Chemistry and Physics of Polycarbonates", Polymer Review, Vol. IX, Seite 27 ff., Interscience Publishers, New York, 1964) erfolgen:

1. Nach dem Lösungsverfahren in disperser Phase, sogenanntes "Zweiphasengrenzflächenverfahren".

2. Nach dem Lösungsverfahren in homogener Phase, auch "Pyridinverfahren" genannt.

3. Nach dem Schmelzumesterungsverfahren.

Die erfindungsgemäß einzusetzenden Polycarbonate haben mittlere Gewichtsmittelmolekulargewichte $\overline{M}w$ (ermittelt durch Messung der relativen Viskosität in $CH_2Cl_2$ bei 25°C und einer Konzentration von 0,5 g in 100 ml $CH_2Cl_2$) zwischen 10.000 und 80.000, vorzugsweise zwischen 15.000 und 40.000.

Den erfindungsgemäßen Polycarbonatformmassen können vor, während oder nach ihrer Verarbeitung die für thermoplastische Polycarbonate üblichen Additive, wie Stabilisatoren, so z.B. Thermostabilisatoren, wie beispielsweise organische Phosphite, gegebenenfalls in Kombination mit monomeren oder oligomeren Epoxiden, UV-Stabilisatoren, insbesondere solchen auf Basis von Stickstoffhaltigen Heterocyclen, wie Triazolen, optischen Aufhellern, Flammschutzmitteln, insbesondere Fluor-haltigen, wie perfluorierte Salze organischer Säure, Polyperfluorethylen, Salzen organischer Sulfonsäuren und deren Kombinationen, gegebenenfalls anderen Entformungsmitteln, Farbmitteln, Pigmenten, Antistatika, Füllstoffen und Verstärkungsstoffen in den üblichen Mengen zugesetzt werden.

Die Stabilisatoren (I) sind literaturbekannt (siehe beispielsweise Römpp "Lexikon der Chemie" 6. Auflage, S. 3952) oder nach literaturbekannten Verfahren erhältlich (siehe Ullmann: 4. Auflage, Vol. 22, S. 357 , US 2 667 503, (1951)).

Beispiele dafür sind die N-Methyl-, N-Ethyl-, n-i/n-Propyl-, N-i/n/neo/tert.-Butyl-, N-n/i-Pentyl-, N-Cyclohexyl-, N-Cyclopentyl-, N-Phenyl- und N-Benzylderivate des Saccharins, ferner

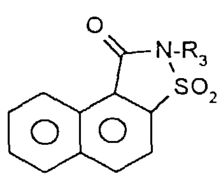 , 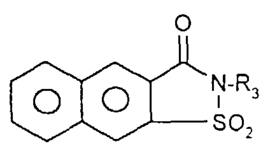 und 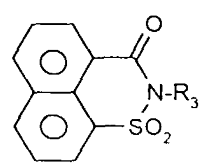 ,

wobei $R_3$ H, $CH_3$, $-C_2H_5$, i/n-Propyl, i/n/neo/tert.-Butyl, n/i-Pentyl, Cyclohexyl, Cyclopentyl, Phenyl und Benzyl sein kann.

Bevorzugt sind N-Methyl-, N-Phenyl- und N-Benzylsaccharin. Ganz besonders bevorzugt sind N-Methyl- sowie N-Phenylsaccharin.

Eingesetzt werden die genannten Stabilisatoren einzeln oder in beliebigen Gemischen, in Konzentrationen von 0,01 Gew.-% bis 2,5 Gew.-%, wobei die Zugabe in Substanz, als Pulver oder Schmelze oder aber als Lösung vor oder während der Aufarbeitung des Polycarbonatharzes, aber auch in einem anschließenden Compoundierschritt erfolgen kann.

Dabei kann es vorteilhaft sein, wenn die Formmassen neben den genannten Stabilisatoren, noch Polypropylenglykole in Mengen von 0,1 Gew.-% bis 3,5 Gew.-%, bevorzugt 0,25 Gew.-% bis 2,0 Gew.-% gegebenenfalls endverkapptem Polypropylenglykol mit einem mittleren Molekulargewicht von 250 bis 10.000, bevorzugt 500 bis 5.000 enthalten. Derartige Polypropylenglykole sind literaturbekannt. Zur Beseitigung gelegentlich auftretender leichter Gelbfärbungen ist es unter Umständen sinnvoll die Formmassen darüber hinaus mit den für Polycarbonat üblichen Phosphor-haltigen Stabilisatoren auszurüsten.

Die erfindungsgemäßen Polycarbonate können zu Förmkörpern verarbeitet werden, indem man, beispielsweise, die in bekannter Weise isolierten Polycarbonate zu Granulat extrudiert und dieses Granulat, gegebenenfalls nach Zusatz der obengenannten Additive, durch Spritzguß zu verschiedenen Artikeln in bekannter Weise verarbeitet.

Die erfindungsgemäßen Polycarbonate sind als Formkörper überall dort einsetzbar, wo die bislang für diesen Zweck bekannten Polycarabonate eingesetzt werden, besonders jedoch im medizinischen Anwendungsbereich, also

z.B. für Dialysatorgehäuse.

Gegenstand der vorliegenden Erfindung ist somit auch die Verwendung der erfindungsgemäßen Polycarbonatformmassen zur Herstellung von Gegenständen für medizinische Anwendungen.

Den erfindungsgemäßen Polycarbonaten können, für meist nicht transparente Anwendungen, noch andere Thermoplaste in üblichen Mengen, d.h. zwischen 10 Gew.-% und 50 Gew.-%, bezogen auf das erfindungsgemäße Polycarbonat, zugemischt werden.

Geeignete andere Thermoplaste sind beispielsweise aromatische Polyestercarbonate, Polycarbonate auf Basis anderer Bisphenole als die erfindungsgemäßen Polycarbonate, Polyalkylenterephthalate, EPDM-Polymerisate, Polystyrol und Co- und Pfropfcopolymerisate auf Basis Styrol wie insbesondere ABS.

## Beispiele

Zur Herstellung der Probekörper wurde ein additivfreies, unstabilisiertes Polycarbonat mit einem mittleren Molekulargewicht von ca. 30.000 (Mw nach GPC), Lösungsviskosität: $\eta$ = 1,293 bei 300°C auf einem Zweiwellenextruder mit der angegebenen Menge Stabilisator compoundiert und anschließend granuliert. Aus diesem Granulat werden anschließend Farbmusterplättchen abgespritzt (Dicke 4 mm). Der Yellowness-Index dieser Plättchen wird vor der Bestrahlung bestimmt (Hunter-Lab-Gerät), anschließend werden diese Probekörper bestrahlt (Dosis: 5 Mrad; Co-Bombe), 10 Tage im Dunkeln gelagert und wieder der YI bestimmt. Aus der Differenz der beiden Messungen, vor und nach der Bestrahlung, wird der zur Beurteilung verwendete $YI_{Diff}$ ermittelt.

a) Vergleichsversuche:

| Verbindung | Konz. (Gew.-%) | $YI_{Anfang}$ | $YI_{bestrah}$ | $YI_{Diff}$ |
|---|---|---|---|---|
| $Polycarbonat_{reextr.}$ | - | 6,31 | 48,88 | 42,57 |
| | - | 6,27 | 48,07 | 41,80 |
| Polypropylenglykol | 0,75 | 4,58 | 29,24 | 24,66 |
| | 0,75 | 4,70 | 30,07 | 25,37 |
| Distearyldisulfid | 0,50 | 10,47 | 25,93 | 15,46 |
| | 0,50 | 10,16 | 25,70 | 15,54 |

b)

| Verbindung | Konz. (Gew.-%) | $YI_{Anfang}$ | $YI_{bestrah}$ | $YI_{Diff}$ |
|---|---|---|---|---|
| Beispiel 1: | | | | |
| Saccharin | 0,5 | 4,2 | 18,3 | 14,1 |
| Saccharin | 0,5 | 4,2 | 18,2 | 14,0 |
| Beispiel 2: | | | | |
| Saccharin | 0,25 | 3,9 | 20,7 | 16,8 |
| Saccharin | 0,75 | 3,9 | 20,1 | 16,2 |

Bei jedem Versuch wurden zur Sicherheit der Messung zwei verschiedene Farbmusterplättchen vermessen. Alle Versuche enthielten 0,75 Gew.-% Polypropylenglykol, MG ca. 2.000.

## Patentansprüche

**1.** Polycarbonatformmassen enthaltend

a) 97,5 Gew.-% bis 99,99 Gew.-% eines Polycarbonates oder Copolycarbonates und

b) 0,01 Gew.-% bis 2,5 Gew.-% eines $\beta,\gamma$-Stabilisators der allgemeinen Formel (I), bezogen jeweils auf 100

Gew.-% aus a) + b),

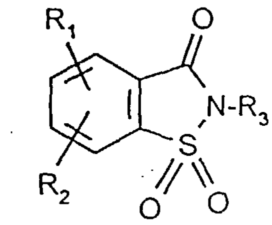

(I)

worin
$R_1$ und $R_2$ unabhängig voneinander für H, $C_1$-$C_{36}$ gegebenenfalls verzweigte Alkylgruppen, $C_7$-$C_{18}$ gegebenenfalls verzweigte und/oder substituierte Alkylaryl-Reste oder Aralkyl-Reste oder $C_6$-$C_{18}$ gegebenenfalls substituierte Aryl-Reste stehen, oder worin zwei Reste $R_1$ und $R_2$ für einen ankondensierten, gegebenenfalls substituierten aromatischen Ring stehen, und worin $R_3$ die unter $R_1$ genannten Bedeutungen hat, ausgenommen Saccharin.

**2.** Formmassen gemäß Anspruch 1, dadurch gekennzeichnet, daß der β,γ-Stabilisator (I) N-Methylsaccharin oder N-Phenylsaccharin ist.

**3.** Polycarbonatformmassen enthaltend

a) 97,5 Gew.-% bis 99,99 Gew.-% eines Polycarbonates oder Copolycarbonates und

b) 0,01 Gew.-% bis 2,5 Gew.-% eines β,γ-Stabilisators der allgemeinen Formel (I), bezogen jeweils auf 100 Gew.-% aus a) + b),

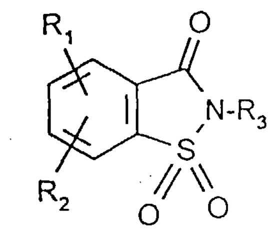

(I)

worin
$R_1$ und $R_2$ unabhängig voneinander für H, $C_1$-$C_{36}$ gegebenenfalls verzweigte Alkylgruppen, $C_7$-$C_{18}$ gegebenenfalls verzweigte und/oder substituierte Alkylaryl-Reste oder Aralkyl-Reste oder $C_6$-$C_{18}$ gegebenenfalls substituierte Aryl-Reste stehen, oder worin zwei Reste $R_1$ und $R_2$ für einen ankondensierten, gegebenenfalls substituierten aromatischen Ring stehen, und worin $R_3$ die unter $R_1$ genannten Bedeutungen hat,

c) 0,1 Gew.-% bis 3,5 Gew.-%, gegebenenfalls endgruppenverkappte Polypropylenglykole, mit einem mittleren Molekulargewicht von 250 bis 10.000, wobei sich die Gewichtsprozente von c) jeweils auf 100 Gew.-% a) + b) beziehen.

**4.** Formmassen gemäß den Ansprüchen 1 bis 3, dadurch gekennzeichnet, daß die Polycarbonate auf Basis von 2,2-Bis-(4-hydroxyphenyl)-propan, 1,1-Bis-(4-hydroxyphenyl)-3,3,5-trimethylcyclohexan und 1,1-Bis-(4-hydroxyphenyl)-1-phenylethan oder deren Mischungen synthetisiert wurden.

**5.** Verfahren bei dem Formkörper γ-Stahlen ausgesetzt sind, dadurch gekenn zeichnet, daß die Formkörper Polycarbonatformmassen enthaltend

a) 97,5 Gew.-% bis 99,99 Gew.-% eines, Polycarbonates oder Copolycarbonates und

b) 0,01 Gew.-% bis 2,5 Gew.-% eines β,γ-Stabilisators der allgemeinen Formel (I), bezogen jeweils auf 100

Gew.-% aus a) + b),

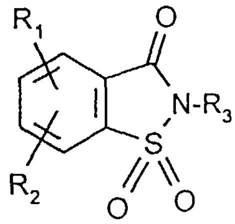

(I)

worin
$R_1$ und $R_2$ unabhängig voneinander für H, $C_1$-$C_{36}$ gegebenenfalls verzweigte Alkylgruppen, $C_7$-$C_{18}$ gegebenenfalls verzweigte und/oder substituierte Alkylaryl-Reste oder Aralkyl-Reste oder $C_6$-$C_{18}$ gegebenenfalls substituierte Aryl-Reste stehen, oder worin zwei Reste $R_1$ und $R_2$ für einen ankondensierten, gegebenenfalls substituierten aromatischen Ring stehen, und worin $R_3$ die unter $R_1$ genannten Bedeutungen hat ausgenommen Saccharin, sind.

**6.** Verwendung der Polycarbonatformmassen der Ansprüche 1 bis 4 zur Herstellung von Gegenständen für medizinische Anwendungen.

**Claims**

**1.** Polycarbonate moulding compositions containing

a) 97.5 % by weight to 99.9 % by weight of a polycarbonate or copolycarbonate, and

b) 0.01 % by weight to 2.5 % by weight of a β,γ-stabiliser of general formula (I), with respect to 100 % by weight of a) + b) in each case

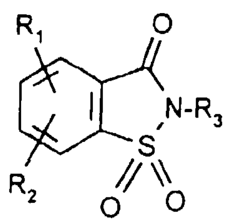

(I)

wherein
$R_1$ and $R_2$ represent, independently of each other, H, $C_1$-$C_{36}$, alkyl groups which are optionally branched, $C_7$-$C_{18}$ alkylaryl radicals or aralkyl radicals which are optionally branched and/or substituted, or $C_6$-$C_{18}$ aryl radicals which are optionally substituted, or wherein two $R_1$ and $R_2$ radicals represent an aromatic ring which is incorporated by condensation and which is optionally substituted, and wherein $R_3$ has the meanings given for $R_1$, with the exception of saccharin.

**2.** Moulding compositions according to claim 1, characterised in that the β,γ-stabiliser (I) is N-methylsaccharin or N-phenylsaccharin.

**3.** Polycarbonate moulding compositions containing

a) 97.5 % by weight to 99.9 % by weight of a polycarbonate or copolycarbonate, and

b) 0.01 % by weight to 2.5 % by weight of a β,γ-stabiliser of general formula (I), with respect to 100 % by weight of a) + b) in each case

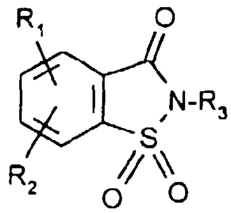

(I)

wherein
$R_1$ and $R_2$ represent, independently of each other, H, $C_1$-$C_{36}$ alkyl groups which are optionally branched, $C_7$-$C_{18}$ alkylaryl radicals or aralkyl radicals which are optionally branched and/or substituted, or $C_6$-$C_{18}$ aryl radicals which are optionally substituted, or wherein two $R_1$ and $R_2$ radicals represent an aromatic ring which is incorporated by condensation and which is optionally substituted, and wherein $R_3$ has the meanings given for $R_1$,

c) 0.1 % by weight to 3.5 % by weight of polypropylene glycols, which are optionally capped by terminal groups and which have an average molecular weight from 250 to 10,000, wherein the percentages by weight of c) relate to 100 % by weight of a) and b) in each case.

**4.** Moulding compositions according to claims 1 to 3, characterised in that the polycarbonates have been synthesised based on 2,2-bis-(4-hydroxyphenyl)propane, 1,1-his-(4-hydroxyphenyl)-3,3,5-trimethylcyclohexane and 1,1-bis-(4-hydroxyphenyl)1-phenylethane or mixtures thereof.

**5.** A process in which mouldings are exposed to γ-rays, characterised in that the mouldings are polycarbonate moulding compositions containing

a) 97.5 % by weight to 99.9 % by weight of a polycarbonate or copolycarbonate, and

b) 0.01 % by weight to 2.5 % by weight of a β,γ-stabiliser of general formula (I), with respect to 100 % by weight of a) + b) in each case

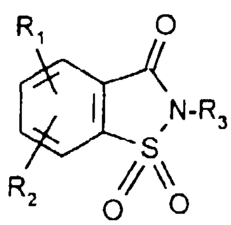

(I)

wherein
$R_1$ and $R_2$ represent, independently of each other, H, $C_1$-$C_{36}$ alkyl groups which are optionally branched, $C_7$-$C_{18}$ alkylaryl radicals or aralkyl radicals which are optionally branched and/or substituted, or $C_6$-$C_{18}$ aryl radicals which are optionally substituted, or wherein two $R_1$ and $R_2$ radicals represent an aromatic ring which is incorporated by condensation and which is optionally substituted, and wherein $R_3$ has the meanings given for $R_1$,
with the exception of saccharin.

**6.** Use of the polycarbonate moulding compositions of claims 1 to 4 for the production of articles for medical applications.

## Revendications

**1.** Matières à mouler en polycarbonates contenant :

a) 97,5 % en poids à 99,99 % en poids d'un polycarbonate ou copolycarbonate et
b) 0,01 % en poids à 2,5 % en poids - pour 100 % en poids de a) + b) - d'un stabilisant contre les rayonnements β,γ, de formule générale (I)

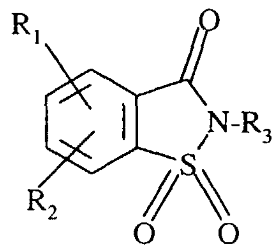

(I)

dans laquelle

$R_1$ et $R_2$ représentent chacun, indépendamment l'un de l'autre, H, un groupe alkyle éventuellement ramifié en $C_1$-$C_{36}$, un groupe alkylaryle ou aralkyle éventuellement ramifié et/ou substitué en $C_7$-$C_{18}$ ou un groupe aryle éventuellement substitué en $C_6$-$C_{18}$, ou bien deux groupes $R_1$ et $R_2$ sont reliés avec formation d'un cycle aromatique condensé et éventuellement substitué,
et $R_3$ a les significations indiquées pour $R_1$,

à l'exception de la saccharine.

2. Matières à mouler selon revendication 1, caractérisées en ce que le stabilisant aux rayonnements β,γ, (I) consiste en la N-méthylsaccharine ou la N-phénylsaccharine.

3. Matières à mouler en polycarbonates contenant

a) 97,5 % en poids à 99,99 % en poids d'un polycarbonate ou copolycarbonate et
b) 0,01 % en poids à 2,5 % en poids - pour 100 % en poids de a) + b) - d'un stabilisant contre les rayonnements β,γ, de formule générale (I)

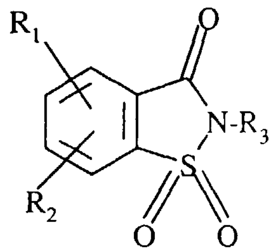

(I)

dans laquelle

$R_1$ et $R_2$ représentent chacun, indépendamment l'un de l'autre, H, un groupe alkyle éventuellement ramifié en $C_1$-$C_{36}$, un groupe alkylaryle ou aralkyle éventuellement ramifié et/ou substitué en $C_7$-$C_{18}$ ou un groupe aryle éventuellement substitué en $C_6$-$C_{18}$, ou bien deux groupes $R_1$ et $R_2$ sont reliés en formant un cycle aromatique condensé et éventuellement substitué,
et $R_3$ a les significations indiquées pour $R_1$,

c) 0,1 % en poids à 3,5 % en poids de polypropylèneglycols à groupes terminaux éventuellement bloqués, au poids moléculaire moyen de 250 à 10 000, les pourcentages indiqués pour c) se rapportant à 100 % en poids de a) + b).

4. Matières à mouler selon les revendications 1 à 3, caractérisées en ce que les polycarbonates ont été préparés à

base du 2,2-bis-(4-hydroxyphényl)propane, du 1,1-bis-(4-hydroxyphényl)-3,3,5-triméthylcyclohexane et du 1,1-bis-(4-hydroxyphényl)-1-phényléthane ou leurs mélanges.

**5.** Procédé dans lequel on expose des objets moulés à des rayonnements γ, caractérisé en ce que les objets moulés consistent en matières à mouler en polycarbonates contenant

a) 97,5 % en poids à 99,99 % en poids d'un polycarbonate ou copolycarbonate et
b) 0,01 % en poids à 2,5 % en poids - pour 100 % en poids de a) + b) - d'un stabilisant contre les rayonnements β,γ, de formule générale (I)

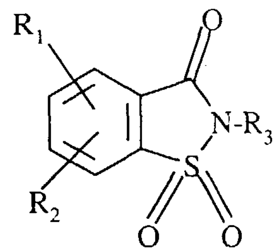

(I)

dans laquelle

$R_1$ et $R_2$ représentent chacun, indépendamment l'un de l'autre, H, un groupe alkyle éventuellement ramifié en $C_1$-$C_{36}$, un groupe alkylaryle ou aralkyle éventuellement ramifié et/ou substitué en $C_7$-$C_{18}$ ou un groupe aryle éventuellement substitué en $C_6$-$C_{18}$, ou bien deux groupes $R_1$ et $R_2$ sont reliés avec formation d'un cycle aromatique condensé et éventuellement substitué,
$R_3$ ayant les significations indiquées pour $R_1$,

à l'exception de la saccharine.

**6.** Utilisation des matières à mouler en polycarbonates des revendications 1 à 4 pour la fabrication d'objets destinés à des applications médicales.